# EUROPÄISCHE PATENTANMELDUNG

(11) **EP 2 557 104 A1**
(43) Veröffentlichungstag der Anmeldung: **13.02.2013**
(21) Anmeldenummer: 12180154.2
(22) Anmeldetag: 10.08.2012
(51) Int. Cl.: C08G 64/02, C08G 64/42

(54) **Verfahren zur Herstellung von niedermolekularem Polyalkylencarbonat**

(30) Priorität: 12.08.2011 EP 11177415
(71) Anmelder: BASF SE, 67056 Ludwigshafen (DE)
(72) Erfinder: Courtois, Julien, 67063 Ludwigshafen (DE); Schneele, Martin, 67165 Waldsee (DE); Riegel, Willi, 68753 Waghäusel (DE); Brym, Anna Katharina, 67117 Limburgerhof (DE); Görtz, Hans-Helmut, 67251 Freinsheim (DE)

(57) **Zusammenfassung**

Die Erfindung betrifft ein Verfahren zur Herstellung von Polyalkylencarbonat mit einem Molekulargewicht Mn gemäß DIN 55672-1 von 1000 bis 40.000 g/mol, dadurch gekennzeichnet, dass ein Polypropylencarbonat mit einem Molekulargewicht Mn gemäß DIN 55672-1 von größer 50.000 g/mol mit 5 bis 50 %iger Salpetersäure bei 10 bis 100 °C behandelt wird.

## Beschreibung

Die Erfindung betrifft ein Verfahren zur Herstellung von Polyalkylencarbonat mit einem Molekulargewicht Mn gemäß DIN 55672-1 von 1000 bis 40.000 g/mol, dadurch gekennzeichnet, dass ein Polypropylencarbonat mit einem Molekulargewicht Mn gemäß DIN 55672-1 von größer 50.000 g/mol mit 5 bis 50 %iger Salpetersäure bei 10 bis 100 °C behandelt wird.

Unter Polyalkylencarbonaten werden in erster Linie Polyethylencarbonat, Polycylohexylencarbonat und insbesondere Polypropylencarbonat sowie Copolymere aus den zuvorgenannten Polymeren wie beispielsweise Polycylohexylenco-propylencarbonat verstanden.

Die in der Literatur bekannten Polyalkylencarbonate weisen in der Regel Molekulargewichte Mn gemäß DIN 55672-1 70.000 bis 150.000 g/mol. Das Molekulargewicht Mw liegt üblicherweise bei 250.000 bis 3000.000 g/mol. Für manche Anwendungen sind derart hochmolekulare Polyalkylencarbonate nicht geeignet. Beispielsweise lassen sich die obengenannten Polyalkylencarbonate nicht zu wässrigen Dispersionen verarbeiten. Wässrige Polypropylencarbonat-Mischungen sind unter anderem für die Papierbeschichtung von Interesse.

Weiterhin ist es für manche Anwendungen vorteilhaft, wenn niedermolekulare Polyalkylencarbonate mit einer Polydispersität von kleiner 4, vorzugsweise kleiner 3 und insbesondere kleiner 2,5 zum Einsatz gelangen.

In der WO 2000/039172 ist ein Verfahren zum Molekulargewichtsabbau von Polyalkylencarbonaten mittels Zusatz von Wasser beziehungsweise Glycerin bei Temperaturen über 150 °C beschrieben. Spezifische Angaben zum Molekulargewichtsabbau sind in der WO 2000/039172 nicht zu finden. So wird weder mitgeteilt welches Molekulargewicht noch welche Polydispersität die "niedermolekularen" Polyalkylencarbonate aufweisen.

Ziel der vorliegenden Erfindung war es, ein prozessfähiges Verfahren bereitzustellen, das niedermolekulare Polyalkylencarbonate mit einem Molekulargewicht Mn gemäß DIN 55672-1 von 1000 bis 40.000 g/mol und kleinen Polydispersitäten aus höhermolekularen Vorstufen liefert.

Überraschenderweise liefert das eingangs beschriebene Verfahren - die Umsetzung der höhermolekularen Vorstufen mit 5 bis 50 %iger Salpetersäure bei 10 bis 100 °C - einen prozessfähigen Zugang zu den gewünschten Polyalkylencarbonaten.

Im Folgenden wird das Verfahren näher beschrieben:

Ausgangsprodukte sind höhermolekularen Polyalkylencarbonate mit einem Molekulargewicht Mn gemäß DIN 55672-1 von größer 50.000 g/mol.

Unter Polyalkylencarbonaten werden in erster Linie Polyethylencarbonat (siehe EP-A 1264860), erhältlich durch Copolymerisation von Ethylenoxid und Kohlendioxid, Polycylohexylencarbonat (siehe US 4,763,715) erhältlich durch Copolymerisation von Cyclohexenoxid und Kohlendioxid, und insbesondere Polypropylencarbonat (siehe US 3,585,168, WO 2006/061237, WO 2010/013948 und WO 2010/022388), erhältlich durch Copolymerisation von Propylenoxid und Kohlendioxid verstanden. Unter Polyalkylencarbonaten werden auch Copolymere aus den obengenannten Polymeren wie beispielsweise Polycylohexylenco-propylencarbonat verstanden.

Die Polyalkylencarbonat-Kette kann sowohl Ether- als auch Carbonatgruppen enthalten. Der Anteil an Carbonatgruppen im Polymer ist abhängig von den Reaktionsbedingungen wie insbesondere dem verwendeten Katalysator. In den bevorzugten Polyalkylencarbonaten sind mehr als 85 und bevorzugt mehr als 90 % aller Verknüpfungen Cabonat-Gruppen. Geeignete Zink- und Kobalt-Katalysatoren sind in EP-A 1264860, US 4,763,715, US 3,585,168, WO 2006/061237, WO 2010/013948 und WO 2010/022388) beschrieben. Polypropylencarbonat kann weiterhin analog Soga et al., Polymer Journal, 1981, 13, 407-10 hergestellt werden. Das Polymer ist auch kommerziell erhältlich und wird beispielsweise von Empower Materials Inc. oder Aldrich im Markt angeboten.

Das Molekulargewicht Mn der nach den obengenannten Verfahren hergestellten Polyalkylencarbonate, insbesondere Polypropylencarbonate beträgt in der Regel 70.000 bis 150.000 g/mol. Das Molekulargewicht Mw liegt üblicherweise bei 250.000 bis 3000.000 g/mol. Das Verhältnis der Ether- zu Carbonat-Gruppen im Polymer beträgt 5:100 bis 90:100.

Die eingesetzte Salpetersäure weist in der Regel eine Konzentration von 5 bis 50 mol% auf. Konzentrierte Salpetersäure führt zur Zersetzung beziehungsweise zum kompletten Abbau des Polymers, während Salpetersäure unter 5 Mol% das Polymer nur sehr langsam abbaut. Die besten Ergebnisse wurden mit 10 bis 25 %iger Salpetersäure erzielt. Hier kann das niedermolekulare Polyalkylencarbonat in hohen Ausbeuten gewonnen werden.

Weiterhin hat sich als vorteilhaft erwiesen, ein aprotisches Lösungsmittel als Kosolvens zuzusetzen. Als aprotische Lösungsmittel kommen alle unter den Reaktionsbedingungen inerte Lösungsmittel in Frage. Beispielsweise haben sich Ketone, Sulfone oder cyclische Carbonate bewährt, wobei Aceton besonders bevorzugt ist. Mittels des Kosolvens werden in der Regel niedrigere Polydispersitäten, d.h. einheitlichere Polyalkylencarbonate erhalten. Essigester lieferte als Kosolvens keine guten Ergebnisse.

Das erfindungsgemäße Verfahren wird in der Regel bei Temperaturen von 10 bis 100 °C, vorzugzweise bei 20 bis 50°C und insbesondere bevorzugt bei Raumtemperatur durchgeführt. Weiterhin wird das erfindungsgemäße Verfahren in der Regel drucklos durchgeführt. Bei Verwendung eines niedrigsiedenden Kosolvens kann die Reaktion auch unter Druck ausgeführt werden.

Die gebildeten Polypropylencarbonate mit einem Mn von 1000 bis 40.000 g/mol, bevorzugt 2000 bis 25000 g/mol und insbesondere bevorzugt 3000 bis 15.000 g/mol, weisen üblicherweise niedrige Glastemperaturen von unter 25°C auf. Zudem weisen diese Formmassen ein E-Modul nach ISO 527-2 bzw. DIN 53455 von kleiner 400 MPa und eine Bruchspannung kleiner 10 MPa auf. Für die meisten Folienanwendungen sind diese niedermolekularen Polypropylencarbonate nicht zu verwenden. Auf der anderen Seite lassen sich diese niedermolekularen Polypropylencarbonate zu wässrigen Dispersionen verarbeiten wie sie unlängst in der EP 11169263.8 beschrieben sind. Die Polydispersität (Verhältnis von Gewichtsmittel (Mw) zu Zahlenmittel (Mn)) liegt in der Regel zwischen 1 und 10, vorzugweise 1 und 4, und insbesondere bevorzugt kleiner 3. Die verwendeten Polypropylencarbonate können bis zu 1 % Carbamat- und Harnstoff-Gruppen enthalten.

### Beispiele:

### Anwendungstechnische Messungen:

Das Molekulargewicht Mw beziehungsweise Mn des Polypropylencarbonats wurde nach DIN 55672-1 wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Kalium-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mn = 505 bis Mn = 2.740.000.

### Herstellung des Polypropylencarbonat s (vor dem Abbau)

### a. Katalysatorherstellung

In einem 1 I-Vierhalskolben, der mit Rührknochen, Heizbad und einer Wasserauskreiseinrichtung versehen war, wurden 35 g zerriebenes Zinkoxid in 250 ml absolutem Toluol vorgelegt. Nach Zugabe von 53 g Glutarsäure wurde unter Rühren 2 Stunden auf 55°C erwärmt. Danach wurde bis zum Sieden erhitzt, wobei unter Rückfluss das Reaktionswasser azeotrop abdestilliert wurde, bis kein Wasser mehr überging. Das Toluol wurde abdestilliert und der Rückstand bei 80°C im Hochvakuum getrocknet.

### b. Polymerisation

12 g Zinkglutarat wurden in den Reaktor vorgelegt. Es wurde ein 3,5 I-Autoklav mit mechanischem Rührer verwendet Nach Verschließen des Reaktors wurde mehrmals mit N₂-Gas gespült. Dann wurden 620 g Toluol zugegeben und bei Raumtemperatur (23°C) 6 bar CO₂ in den Reaktor gedrückt. Anschließend wurden 310 g Propylenoxid in den Reaktor gedrückt und auf 80°C aufgeheizt. Danach wurde bei 80°C solange CO₂ in den Reaktor gedrückt, bis ein CO₂-Druck von 40 bar erreicht wurde. Der Reaktor wurde für 4 h bei 80°C gehalten, wobei kein CO₂ nachdosiert wurde. Anschließend ließ man auf Raumtemperatur abkühlen.

### c. Aufarbeitung

Der Reaktor wurde belüftet und der Reaktorinhalt wurde in 1 I Essigsäureethylester, das mit 65 Gew.-% konzentrierter Essigsäure, bezogen auf die Polymermenge, und 2 Gew.-% Essigsäureanhydrid bezogen auf die Essigsäure angesäuert war, eingegossen. Es wurde 2 h bei 40° C nachgerührt. Anschließend wurde die organische Phase, dreimal mit 1 Liter Wasser gewaschen. Bei der organischen Phase wurde das Lösungsmittel vertreiben und der Polymerrückstand im Vakuum getrocknet.

### d. Analytik

Um den Anteil unerwünschten Nebenprodukten (zyklisches Propylencarbonat und den Polyetheranteil im Polymerrückgrad) zu bestimmen wurden auf einem NMR-Spektrometer AMX 300 der Fa. Bruker ¹H-NMR-Spektren aufgenommen. Der Polyetheranteil betrug 4.2 %, der Anteil an zyklischem Carbonat bezogen auf die Gesamtcarbonatmenge betrug ca. 2.0 %.

Des Weiteren wurde das Molekulargewicht (Mₙ und M_{w}) des Polymeren untersucht:
Mₙ 64.000 g/mol, M_{w} 910.000 g/mol.

### Beispiel 1 (Abbau mit 50%iger HNO₃)

65%ige HNO₃ wurde mit destilliertem Wasser auf eine 50%ige HNO₃ eingestellt.
Das wie oben hergestellte Polypropylencarbonat-Granulat wurde im Verhältnis 1:5 zur 50%igen HNO₃ in ein Glasgefäß gegeben und für 48 Stunden bei Raumtemperatur gerührt. Dabei verklebte das Polypropylencarbonat, wurde teilweise gelöst, und zeigte aber am Ende der 48 Stunden teilweise noch ungelöste Granulatteilchen. Das nicht gelöste Polymer wurde abgetrennt mit destilliertem Wasser neutral gewaschen und anschließend im Vakuumtrockenschrank bei 50°C getrocknet. Die Ausbeute betrug 12 %.

Mn : 6547 g/mol
Mw: 13720 g/mol
D : 2,1

### Beispiel 2 (Abbau mit 10%iger HNO₃, Kosolvenz Aceton)

22g 65%ige HNO₃ wurden mit 31 g Aceton und 120 g 25%ige Polypropylencarbonat -Lösung in Aceton auf 10% HNO₃-Gehalt eingestellt. Der Ansatz wurde in einem Glasgefäß für 72 Stunden bei Raumtemperatur gerührt. Nach 3 Stunden war das PPC vollständig in Lösung. Das entstandene Produkt wurde mit Essigester und destilliertem Wasser versetzt, mit konzentrierter KOH neutralisiert und die Essigesterphase zweimal mit destilliertem Wasser gewaschen. Anschließend wurde das Produkt im Vakuumtrockenschrank bei 50°C getrocknet. Die Ausbeute betrug 97 %.

Mn : 23700 g/mol
Mw: 55000 g/mol
D : 2,32

### Beispiel 3 (Abbau mit 20%iger HNO₃, Kosolvenz Aceton)

146g 65%ige HNO₃ wurden mit 115g Aceton auf 50% HNO₃-Gehalt eingestellt. Das Polyproylencarbonat-Granulat wurde im Verhältnis 1:5 zur 50%igen HNO₃ in ein Glasgefäß gegeben und für 48 Stunden bei Raumtemperatur gerührt. Nach 3 Stunden war das Polyproylencarbonat vollständig in Lösung. Das Produkt wurde mit Wasser gefällt und mit heißem (ca. 98°C) destilliertem Wasser neutral gewaschen und anschließend im Vakuumtrockenschrank bei 50°C getrocknet. Die Ausbeute betrug 90 %.

Mn : 5700 g/mol
Mw: 9700 g/mol
D : 1, 64

### Beispiel 4 (Abbau mit 30%iger HNO₃, Kosolvenz Aceton)

Das Beispiel wurde wie Beispiel 3 nur mit 30%iger HNO₃ durchgeführt. Die Ausbeute betrug 42 %.

Mn : 3000 g/mol
Mw: 5100 g/mol
D : 1,7

**Tabelle 1: Vergleichsversuche mit nicht erfindungsgemäßen Säuren**

| Versuch | Säure | Mn [g/mol] | Mw [g/mol] | D | Bemerkungen |
|---|---|---|---|---|---|
| 1 | unbehandelt | 126080 | 2020500 | 16 | |
| 2 | H₂SO₄ 96% | 75332 | 186430 | 2,47 | |
| 3 | HNO₃ 65% | | | | kein Produkt erhalten |
| 4 | Ameisensäure 98-100% | 12923 | 174920 | 13,54 | Löste sich auf und wurde mit Wasser wieder gefällt |
| 5 | Ameisensäure 80% | 12991 | 102890 | 7,92 | Nicht vollständig gelöst |
| 6 | Ameisensäure 60% | 27882 | 92880 | 3,33 | Nicht vollständig gelöst |
| 7 | Ameisensäure 40% | 55724 | 155510 | 2,79 | Nicht vollständig gelöst |
| 8 | Essigsäure 100% | 21757 | 190930 | 8,78 | Löste sich auf und wurde mit Wasser wieder gefällt |
| 9 | Essigsäure 80% | 11496 | 145530 | 12,66 | Nicht vollständig gelöst |
| 10 | Essigsäure 60% | 12485 | 185020 | 14,82 | Nicht vollständig gelöst |
| 11 | Essigsäure 40% | 53448 | 189740 | 3,55 | Nicht vollständig gelöst |
| 12 | HCl 37% | 56169 | 170650 | 3,04 | Nicht gelöst |
| 13 | HCl 20% | | | | Nicht gelöst |
| 14 | HCL 10% | | | | Nicht gelöst |
| 15 | Phosphorsäure 85% | 13508 | 32577 | 2,41 | Nicht vollständig gelöst |
| 15a | Phosphorsäure 85% | 28196 | 131230 | 4,65 | Werte ungelöstes Produkt |
| 16 | Polyphosphorsäure 100% | 32747 | 162350 | 4,96 | Löste sich auf und wurde mit Wasser wieder gefällt |

In den Vergleichsversuchen wurden andere als die erfindungsgemäßen Säuren eingesetzt. Nach dem Abbau mit konzentrierter Salpetersäure (65%ig) konnte kein Polypropylencarbonat mehr isoliert werden. Salzsäure griff das Polypropylencarbonat nicht an. Mit Ameisensäure, Essigsäure und Phosphorsäure war der Abbau nicht vollständig und lieferte keine prozessfähigen Ergebnisse.

## Patentansprüche

1. Verfahren zur Herstellung von Polyalkylencarbonat mit einem Molekulargewicht Mn gemäß DIN 55672-1 von 1000 bis 40.000 g/mol, **dadurch gekennzeichnet, dass** ein Polypropylencarbonat mit einem Molekulargewicht Mn gemäß DIN 55672-1 von größer 50.000 g/mol mit 5 bis 50 %iger Salpetersäure bei 10 bis 100 °C behandelt wird.

2. Verfahren nach Anspruch 1, **dadurch gekennzeichnet, dass** das Polypropylencarbonat mit einem Molekulargewicht Mn gemäß DIN 55672-1 von größer 50.000 g/mol mit 10 bis 25 %iger Salpetersäure behandelt wird.

3. Verfahren nach einem der vorgenannten Ansprüche, **dadurch gekennzeichnet, dass** als Kosolvens ein aprotisches Lösungsmittel verwendet wird.

4. Verfahren nach Anspruch 3, **dadurch gekennzeichnet, dass** als Kosolvens Aceton verwendet wird.

5. Verfahren nach einem der vorgenannten Ansprüche, **dadurch gekennzeichnet, dass** als Polyalkylencarbonat Polypropylencarbonat eingesetzt wird.
